# EUROPÄISCHE PATENTANMELDUNG

(11) **EP 4 550 656 A1**
(43) Veröffentlichungstag der Anmeldung: **07.05.2025**
(21) Anmeldenummer: 24205262.9
(22) Anmeldetag: 08.10.2024
(51) Int. Cl.: H02P 6/182

(54) **VERFAHREN ZUM ZWEIPHASIGEN BETRIEB EINES DREIPHASIGEN PERMANENTERREGTEN SYNCHRONMOTORS**

(30) Priorität: 06.11.2023 DE 102023130529
(71) Anmelder: Miele & Cie. KG, 33332 Gütersloh (DE)
(72) Erfinder: Rodehüser, Tobias, 59329 Wadersloh (DE); Balzer, Eugen, 33729 Bielefeld (DE); Sammoud, Hafedh, 8090 Kelibia (TN)

(57) **Zusammenfassung**

Die Erfindung betrifft ein Verfahren zum zweiphasigen Betrieb eines dreiphasigen permanenterregten Synchronmotors (M) ohne Rotorwinkelsensor mit wenigstens den Schritten:
• Speisen von lediglich zwei der drei Phasen des Stators des dreiphasigen permanenterregten Synchronmotors (M),
• Ermitteln der Phasenströme (I_{S1}-I_{S2}) und Phasenspannungen (U_{S1}-U_{S2}) der beiden gespeisten Phasen des Stators,
• Setzen des Phasenstroms (Isa) der nicht-gespeisten Phase auf Null,
• Erfassen der Phasenspannung (U_{S3}) der nicht-gespeisten Phase am Stator,
• Schätzen des Rotorwinkels (ε), vorzugsweise und der Kreisfrequenz (ω), des Rotors des dreiphasigen permanenterregten Synchronmotors (M) basierend auf den drei Phasenströmen (I_{S1}-I_{S3}) und den drei Phasenspannungen (U_{S1}-U_{S3}) und
• Regeln des Betriebs des dreiphasigen permanenterregten Synchronmotors (M) in Abhängigkeit des geschätzten Rotorwinkels (ε) des Rotors.

## Beschreibung

Die Erfindung betrifft ein Verfahren zum zweiphasigen Betrieb eines dreiphasigen permanenterregten Synchronmotors sowie eine entsprechende Ansteuerungsvorrichtung, einen entsprechenden dreiphasigen permanenterregten Synchronmotor und ein entsprechendes Haushaltsgerät.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft. Die Energieübertragung vom Stator an die elektrischen Wicklungen des Rotors erfolgt über spezielle Kohlebürsten des Stators, welche Schleifringe des Rotors kontaktieren, was auf die Dauer zum Verschleiß der Kohlebürsten durch Abrieb führt.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor mittels Kohlebürsten und Schleifringen verzichtet werden. Dies kann die zuvor genannten Nachteile vermeiden sowie insgesamt das Gewicht, den Bauraum und die Kosten derartiger permanenterregter Synchronmotoren geringhalten. Die Spulenstränge des Stators können über einen Vierquadrantensteller angesteuert werden. Die Elektronik zur Ansteuerung der Brücke ist ein geregelter Frequenzumrichter. Üblicherweise werden permanenterregte Synchronmotoren dreiphasig ausgebildet, da sie dann den Vorteil einer definierten Läuferstellung bei hoher Dynamik, hohem Drehmoment und hoher Effizienz aufweisen.

Charakteristisch für permanenterregte Synchronmotoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann. Somit ist kein Positionssensor am Motor erforderlich und die Rotorlage wird anhand von elektrischen Größen berechnet bzw. geschätzt.

Alternativ kann auch eine sensorlose feldorientierte Regelung (field-oriented control, FOC) eingesetzt werden. Dabei werden alle 3 Motorphasen bestromt und es gibt keine "floating" Phase. Nach einem ungeregelten U/f Anlauf (der Anlauf kann auch geregelt erfolgen) wird in den geregelten Betrieb übergegangen und die feldorientierte Regelung ist aktiv. Dabei wird der Rotorwinkel durch einen Schätzer bestimmt und damit auch die Kommutierungszeitpunkte.

Dies kann bei einem dreiphasigen Betrieb eines dreiphasigen permanenterregten Synchronmotors beispielsweise erfolgen, indem dem Schätzer die drei Phasenströme und die drei Phasenspannungen zugeführt werden. Dabei können die drei Phasenspannungen gemessen oder die drei berechneten Phasenspannungen (inkl. Korrekturen wie z.B. aus der Totzeit resultierende Abweichungen) aus der Regelung verwendet werden. Im Schätzer selbst sind im Wesentlichen die Maschinengleichungen und ein Schätzalgorithmus enthalten.

Soll nun ein derartiger dreiphasiger permanenterregter Synchronmotor zweiphasig betrieben werden, z.B. durch eine Relaisumschaltung, so fließt durch eine Phase kein Strom mehr. Diese Phase wird jedoch weiterhin hinsichtlich Strom und Spannung gemessen und dem Schätzer als Eingangsgröße zur Verfügung gestellt. Dies führt mangels Bestromung dieser Phase zu einem Phasenstrom gleich Null. Bei der Spannung der unbestromten Phase, die nun nicht mehr mit der B6-Brücke verbunden ist, kann jedoch der Eingangswert für den Schätzer nicht einfach auf Null gesetzt werden, da die Spannung der unbestromten Phase "floatet" bzw. durch den Motor bestimmt wird.

Würde somit ein Schätzer der Rotorlage bzw. des Rotorlagewinkels eines dreiphasigen permanenterregten Synchronmotors weiterhin bei einem zweiphasigen Betrieb des dreiphasigen permanenterregten Synchronmotors eingesetzt werden, so würde dies zu Abweichungen der geschätzten Rotorlage bzw. des geschätzten Rotorlagewinkels gegenüber der tatsächlichen Rotorlage bzw. des tatsächlichen Rotorlagewinkels und dies dann wiederum zu einer instabilen Regelung dreiphasigen permanenterregten Synchronmotors führen.

Der Erfindung stellt sich das Problem, bei einem dreiphasigen permanenterregten Synchronmotor mit Schätzung der aktuellen Rotorlage bzw. des aktuellen Rotorwinkels einen zweiphasigen Betrieb zu ermöglichen, ohne die Qualität der Schätzung der aktuellen Rotorlage zu beeinträchtigen. Dies soll vorzugsweise möglichst einfach und bzw. oder verlässlich erfolgen können. Zumindest soll eine Alternative zu bekannten derartigen Verfahren geschaffen werden.

Erfindungsgemäß wird dieses Problem durch ein Verfahren, durch eine Ansteuerungsvorrichtung, durch einen dreiphasigen permanenterregten Synchronmotor und durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Verfahren zum zweiphasigen Betrieb eines dreiphasigen permanenterregten Synchronmotors ohne Rotorwinkelsensor mit wenigstens den Schritten:
- Speisen von lediglich zwei der drei Phasen des Stators des dreiphasigen permanenterregten Synchronmotors,
- Erfassen der Phasenströme und Phasenspannungen der beiden gespeisten Phasen des Stators,
- Setzen des Phasenstroms der nicht-gespeisten Phase auf Null,
- Erfassen der Phasenspannung der nicht-gespeisten Phase am Stator,
- Schätzen des Rotorwinkels, vorzugsweise und der Kreisfrequenz, des Rotors des dreiphasigen permanenterregten Synchronmotors basierend auf den drei Phasenströmen und den drei Phasenspannungen und
- Regeln des Betriebs des dreiphasigen permanenterregten Synchronmotors in Abhängigkeit des geschätzten Rotorwinkels des Rotors.

Auf diese Art und Weise kann die Schätzung des Rotorwinkels und vorzugsweise ferner der Kreisfrequenz des Rotors basierend auf den realen Verhältnissen bzw. dem tatsächlichen Verhalten des Synchronmotors auch dann erfolgen, falls eine Phase des Synchronmotors nicht verwendet bzw. betrieben wird. Dies kann die Qualität der Schätzung verbessern bzw. auf einer vergleichbaren Qualität wie bei einem dreiphasigen Betrieb halten. Dies kann sich entsprechend positiv und stabilisierend auf einen geregelten Betrieb, d.h. auf eine Regelung der Ist-Drehzahl auf eine Soll-Drehzahl, des Synchronmotors auswirken.

Die nicht-gespeiste Phase des Stators des Synchronmotors kann zum alternativen oder parallelen Betrieb eines einphasigen Motors verwendet werden.

Gemäß einem Aspekt der Erfindung erfolgt das Erfassen der Phasenspannung der nicht-gespeisten Phase am Stator mittels:
- eines ohmschen Spannungsteilers aus einem ersten Widerstand und einem zweiten Widerstand zwischen der nicht-gespeisten Phase und Masse und
- einer Parallelschaltung eines Filter-Kondensators zum zweiten Widerstand, wobei die Parallelschaltung ebenfalls mit Steuerungseinheit verbunden ist.

Mit anderen Worten: ein ohmscher Spannungsteiler, bei dem zum mit dem Steuergerät verbundenen Widerstand ein Filterkondensator parallelgeschaltet wird. Dies kann eine konkrete Möglichkeit der Umsetzung darstellen.

Gemäß einem weiteren Aspekt der Erfindung erfolgt das Speisen von lediglich zwei der drei Phasen des Stators durch Trennen der dritten Phase, vorzugsweise mittels eines schaltbaren Relais, erfolgt. Dies kann konkrete und insbesondere einfach umzusetzende Möglichkeit darstellen, zwischen einem zweiphasigen und einem dreiphasigen Betrieb des dreiphasigen permanenterregten Synchronmotors umzuschalten.

Gemäß einem weiteren Aspekt der Erfindung weist das Verfahren den alternativen Schritt zum Speisen von lediglich zwei der drei Phasen des Stators des dreiphasigen permanenterregten Synchronmotors auf:
- Speisen aller drei Phasen des Stators des dreiphasigen permanenterregten Synchronmotors.

Somit kann alternativ auch ein dreiphasiger Betrieb des Synchronmotors ermöglicht werden, was die Nutzungsmöglichkeiten des dreiphasigen permanenterregten Synchronmotors erhöhen kann.

Die Erfindung betrifft auch eine Ansteuerungsvorrichtung zum Ansteuern eines dreiphasigen permanenterregten Synchronmotors ohne Rotorwinkelsensor im zweiphasigen Betrieb, vorzugsweise gemäß einem Verfahren wie zuvor beschrieben, mit einer Steuerungseinheit, welche ausgebildet ist, lediglich zwei der drei Phasen des Stators des dreiphasigen permanenterregten Synchronmotors zu speisen, und mit einer Abtasteinrichtung, welche ausgebildet ist, die Phasenströme und Phasenspannungen der beiden gespeisten Phasen des Stators zu erfassen, wobei die Abtasteinrichtung ferner ausgebildet ist, den Phasenstrom der nicht-gespeisten Phase auf Null zu setzen, wobei die Abtasteinrichtung ferner ausgebildet ist, die Phasenspannung der nicht-gespeisten Phase am Stator zu erfassen, wobei die Steuerungseinheit ferner ausgebildet ist, den Rotorwinkel, vorzugsweise und die Kreisfrequenz, des Rotors des dreiphasigen permanenterregten Synchronmotors basierend auf den drei Phasenströmen und den drei Phasenspannungen zu schätzen, und wobei die Steuerungseinheit ferner ausgebildet ist, den Betrieb des dreiphasigen permanenterregten Synchronmotors in Abhängigkeit des geschätzten Rotorwinkels des Rotors zu regeln.

Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem dreiphasigen permanenterregten Synchronmotor umzusetzen.

Gemäß einem Aspekt der Erfindung weist die Abtasteinrichtung zum Erfassen der Phasenspannung der nicht-gespeisten Phase am Stator auf:
- eines ohmschen Spannungsteilers aus einem ersten Widerstand und einem zweiten Widerstand zwischen der nicht-gespeisten Phase und Masse und
- einer Parallelschaltung eines Filter-Kondensators zum zweiten Widerstand, wobei die Parallelschaltung ebenfalls mit Steuerungseinheit verbunden ist.

Mit anderen Worten: ein ohmscher Spannungsteiler, bei dem zum mit dem Steuergerät verbundenen Widerstand ein Filterkondensator parallelgeschaltet wird. Dies kann eine konkrete Möglichkeit der Umsetzung darstellen, wie zuvor bereits beschrieben.

Gemäß einem weiteren Aspekt der Erfindung ist die Steuerungseinheit ferner ausgebildet, zum Speisen von lediglich zwei der drei Phasen des Stators die dritte Phase, vorzugsweise mittels eines schaltbaren Relais, zu trennen. Dies kann eine konkrete Möglichkeit der Umsetzung darstellen, wie zuvor bereits beschrieben.

Gemäß einem weiteren Aspekt der Erfindung ist die Steuerungseinheit ferner ausgebildet ist, alternativ zum Speisen von lediglich zwei der drei Phasen des Stators des dreiphasigen permanenterregten Synchronmotors alle drei Phasen des Stators des dreiphasigen permanenterregten Synchronmotors zu speisen. Dies kann eine konkrete Möglichkeit der Umsetzung darstellen, wie zuvor bereits beschrieben.

Die Erfindung betrifft auch einen dreiphasigen permanenterregten Synchronmotor ohne Rotorwinkelsensor mit einer Ansteuerungsvorrichtung wie zuvor beschrieben. Hierdurch kann ein dreiphasiger permanenterregter Synchronmotor bereitgestellt werden, um die zuvor beschriebenen Aspekte der Erfindung bzw. um das erfindungsgemäße zuvor beschriebene Verfahren umzusetzen.

Die Erfindung betrifft auch ein Haushaltsgerät mit mindestens einem dreiphasigen permanenterregten Synchronmotor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Ein Ausführungsbeispiel der Erfindung ist in den Zeichnungen rein schematisch dargestellt und wird nachfolgend näher beschrieben. Es zeigt
- Figur 1: eine Schaltung eines erfindungsgemäßen dreiphasigen permanenterregten Synchronmotors; und
- Figur 2: einen Winkelschätzer der Steuerungseinheit des erfindungsgemäßen dreiphasigen permanenterregten Synchronmotors.

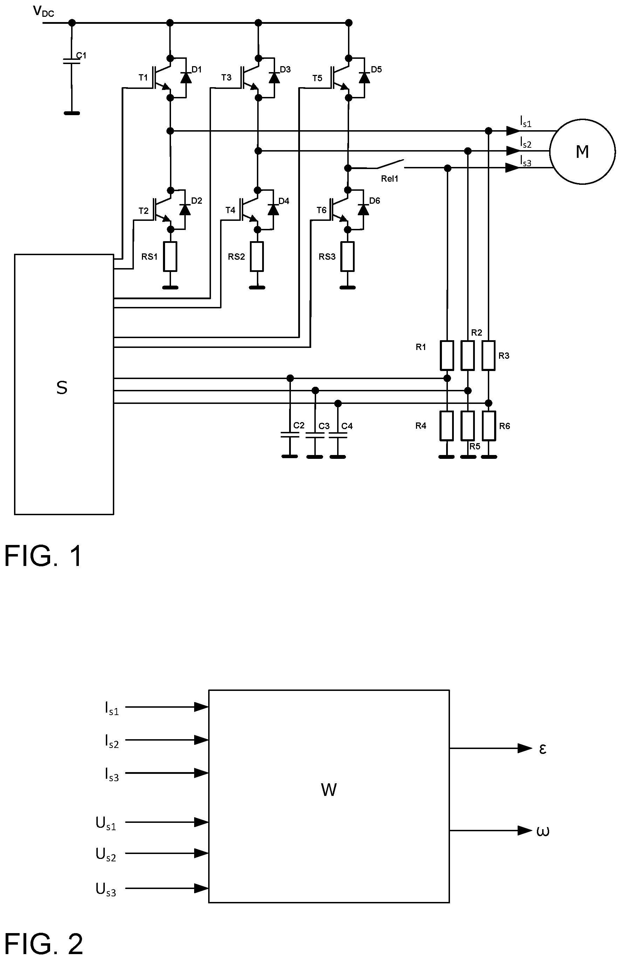

Figur 1 zeigt eine Schaltung eines erfindungsgemäßen dreiphasigen permanenterregten Synchronmotors M. Der dreiphasige permanenterregte Synchronmotor M, kurz PMSM-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6, sechs Dioden D1-D6 und drei ohmschen Widerständen RS1-RS3 der B6-Brücke ein dreiphasiges Drehfeld an den PMSM-Motor M gelegt. Hierdurch wird eine Rotation eines Rotors (nicht dargestellt) des PMSM-Motors M im Betrieb bewirkt.

Damit das Drehfeld, welches auf den Stator (nicht dargestellt) des PMSM-Motors M gegeben wird, passend zur Rotorlage ist, muss die Rotorlage bestimmt werden. Dies erfolgt durch die Messung elektrischer Größen in Kombination mit einem Software-Motormodell seitens der Steuerungseinheit S in Form eines Winkelschätzers W, siehe Figur 2. Somit werden die drei Phasenströme I_{S1}-I_{S3} sowie die drei Phasenspannungen U_{S1}-U_{S3} mittels der drei Kondensatoren C2-C4 sowie ohmschen Widerstände R1-R3 und R4-R6 gemessen, siehe Figur 1, und dem Winkelschätzer W als Eingangsgrößen zugeführt, siehe Figur 2.

Alternativ können die 3 Phasenspannungen auch in einer Ausführungsform von der Software berechnet werden und dem Winkelschätzer W zugeführt werden. Dies kann zwar ungenauer sein, ist in manchen Anwendungen aber durchaus umsetzbar. Dabei müsste dann im zweiphasigen Betrieb nur die eine Phasenspannung gemessen werden.

Hieraus ergeben sich als Ausgangsgrößen des Winkelschätzers W der Rotorwinkel ε, d.h. der aktuelle Winkel des Rotors des PMSM-Motors M, welche auch als Rotorlage ε oder als Rotorlagewinkel ε bezeichnet werden kann, sowie die Kreisfrequenz ω der Rotation des Rotors des PSMS-Motors M. Entsprechend kann der Winkelschätzer W auch als Rotorlageschätzer W oder als Rotorlagewinkelschätzer W bezeichnet werden.

Mittels eines schaltbaren Relais Rel1 kann dabei ein Strang des Stators des PMSM-Motors M getrennt werden, was zu einem zweiphasigen Betrieb des dreiphasigen PMSM-Motors M führt.

Um dennoch den PMSM-Motor M stabil drehzahlgeregelt betreiben zu können, wird erfindungsgemäß der Winkelschätzer W weiterhin mit den drei Phasenströme I_{S1}-I_{S3} sowie den drei Phasenspannungen U_{S1}-U_{S3} als Eingangsgrößen gespeist.

Um dabei die ungespeiste Phase bei der Schätzung des Rotorwinkels ε berücksichtigen zu können, wird der Phasenstrom I_{S3} der nicht-gespeisten Phase auf Null gesetzt. Ferner wird die Phasenspannung U_{S3} der nicht-gespeisten Phase am Stator über die ohmschen Widerstände R1, R4 und den Kondensator C2 erfasst.

Somit sind auch bei einem zweiphasigen Betrieb des dreiphasigen PMSM-Motors M alle Eingangsgrößen für den Winkelschätzer W bekannt und der Rotorwinkel ε kann weiterhin korrekt geschätzt werden.

### Bezugszeichenliste (Bestandteil der Beschreibung)

- C1-C4: Kondensatoren
- D1-D6: Dioden der B6-Brücke
- T1-T6: Transistoren der B6-Brücke
- RS1-RS3: ohmsche Widerstände der B6-Brücke
- R1-R6: ohmsche Widerstände
- Rel1: schaltbares Relais
- V_{DC}: Gleichspannung; Zwischenkreisspannung

- I_{S1}-I_{S3}: Phasenströme
- U_{S1}-U_{S3}: Phasenspannungen

- ε: Rotorwinkel; Rotorlage; Rotorlagewinkel
- ω: Kreisfrequenz

- M: dreiphasiger permanenterregter Synchronmotor; PMSM-Motor
- S: Steuerungseinheit; geregelter Frequenzumrichter
- W: Winkelschätzer; Rotorlageschätzer; Rotorlagewinkelschätzer

## Patentansprüche

1. Verfahren zum zweiphasigen Betrieb eines dreiphasigen permanenterregten Synchronmotors (M) ohne Rotorwinkelsensor mit wenigstens den Schritten:
• Speisen von lediglich zwei der drei Phasen des Stators des dreiphasigen permanenterregten Synchronmotors (M),
• Ermitteln der Phasenströme (I_{S1}-I_{S2}) und Phasenspannungen (U_{S1}-U_{S2}) der beiden gespeisten Phasen des Stators,
• Setzen des Phasenstroms (Isa) der nicht-gespeisten Phase auf Null,
• Erfassen der Phasenspannung (U_{S3}) der nicht-gespeisten Phase am Stator,
• Schätzen des Rotorwinkels (ε), vorzugsweise und der Kreisfrequenz (w), des Rotors des dreiphasigen permanenterregten Synchronmotors (M) basierend auf den drei Phasenströmen (I_{S1}-I_{S3}) und den drei Phasenspannungen (U_{S1}-U_{S3}) und
• Regeln des Betriebs des dreiphasigen permanenterregten Synchronmotors (M) in Abhängigkeit des geschätzten Rotorwinkels (ε) des Rotors.

2. Verfahren nach Anspruch 1, wobei das Ermitteln der Phasenströme (I_{S1}-I_{S2}) und Phasenspannungen (U_{S1}-U_{S2}) der beiden gespeisten Phasen des Stators durch Erfassen oder durch Berechnen in Software erfolgt.

3. Verfahren nach Anspruch 2, wobei das Ermitteln mit Erfassen erfolgt und
wobei das Erfassen der Phasenspannung (U_{S3}) der nicht-gespeisten Phase am Stator erfolgt mittels:
• eines ohmschen Spannungsteilers aus einem ersten Widerstand (R1) und einem zweiten Widerstand (R4) zwischen der nicht-gespeisten Phase und Masse und
• einer Parallelschaltung eines Filter-Kondensators (C2) zum zweiten Widerstand (R4), wobei die Parallelschaltung ebenfalls mit Steuerungseinheit (S) verbunden ist.

4. Verfahren nach einem der Ansprüche 1 bis 3,
wobei das Speisen von lediglich zwei der drei Phasen des Stators durch Trennen der dritten Phase, vorzugsweise mittels eines schaltbaren Relais (Rel1), erfolgt.

5. Verfahren nach einem der vorangehenden Ansprüche,
mit dem alternativen Schritt zum Speisen von lediglich zwei der drei Phasen des Stators des dreiphasigen permanenterregten Synchronmotors (M):
• Speisen aller drei Phasen des Stators des dreiphasigen permanenterregten Synchronmotors (M).

6. Ansteuerungsvorrichtung zum Ansteuern eines dreiphasigen permanenterregten Synchronmotors (M) ohne Rotorwinkelsensor im zweiphasigen Betrieb, vorzugsweise gemäß einem Verfahren nach einem der vorangehenden Ansprüche,
mit einer Steuerungseinheit (S), welche ausgebildet ist, lediglich zwei der drei Phasen des Stators des dreiphasigen permanenterregten Synchronmotors (M) zu speisen, und
mit einer Abtasteinrichtung, welche ausgebildet ist, die Phasenströme (I_{S1}-I_{S2}) und Phasenspannungen (U_{S1}-U_{S2}) der beiden gespeisten Phasen des Stators zu ermitteln,
wobei die Abtasteinrichtung ferner ausgebildet ist, den Phasenstrom (Isa) der nicht-gespeisten Phase auf Null zu setzen,
wobei die Abtasteinrichtung ferner ausgebildet ist, die Phasenspannung (U_{S3}) der nicht-gespeisten Phase am Stator zu erfassen,
wobei die Steuerungseinheit (S) ferner ausgebildet ist, den Rotorwinkel (ε), vorzugsweise und die Kreisfrequenz (ω), des Rotors des dreiphasigen permanenterregten Synchronmotors (M) basierend auf den drei Phasenströmen (I_{S1}-I_{S3}) und den drei Phasenspannungen (U_{S1}-U_{S3}) zu schätzen, und
wobei die Steuerungseinheit (S) ferner ausgebildet ist, den Betrieb des dreiphasigen permanenterregten Synchronmotors (M) in Abhängigkeit des geschätzten Rotorwinkels (ε) des Rotors zu regeln.

7. Ansteuerungsvorrichtung nach Anspruch 6, wobei das Ermitteln der Phasenströme (I_{S1}-I_{S2}) und Phasenspannungen (U_{S1}-U_{S2}) der beiden gespeisten Phasen des Stators durch Erfassen oder durch Berechnen in Software erfolgt.

8. Ansteuerungsvorrichtung nach Anspruch 6 oder 7,
wobei die Abtasteinrichtung zum Erfassen der Phasenspannung (U_{S3}) der nicht-gespeisten Phase am Stator eingerichtet ist und aufweist:
• eines ohmschen aus einem ersten Widerstand (R1) und einem zweiten Widerstand (R4) zwischen der nicht-gespeisten Phase und Masse und
• einer Parallelschaltung eines Filter-Kondensators (C2) zum zweiten Widerstand (R4), wobei die Parallelschaltung ebenfalls mit Steuerungseinheit (S) verbunden ist.

9. Ansteuerungsvorrichtung nach einem der Ansprüche 6 bis 8,
wobei die Steuerungseinheit (S) ferner ausgebildet ist, zum Speisen von lediglich zwei der drei Phasen des Stators die dritte Phase, vorzugsweise mittels eines schaltbaren Relais (Rel1), zu trennen.

10. Ansteuerungsvorrichtung nach einem der Ansprüche 6 bis9,
wobei die Steuerungseinheit (S) ferner ausgebildet ist, alternativ zum Speisen von lediglich zwei der drei Phasen des Stators des dreiphasigen permanenterregten Synchronmotors (M) alle drei Phasen des Stators des dreiphasigen permanenterregten Synchronmotors (M) zu speisen.

11. Dreiphasiger permanenterregter Synchronmotor (M) ohne Rotorwinkelsensor und mit einer Ansteuerungsvorrichtung nach einem der Ansprüche 6 bis 10.

12. Haushaltsgerät mit mindestens einem dreiphasigen permanenterregten Synchronmotor (M) nach Anspruch 11.
